# EUROPEAN PATENT APPLICATION

(11) **EP 1 164 317 A2**
(43) Date of publication of application: **19.12.2001**
(21) Application number: 01114170.2
(22) Date of filing: 11.06.2001
(51) Int. Cl.: F16J 15/12

(54) **Sealing structure for joint of housing parts**

(30) Priority: 12.06.2000 JP 2000175153
(71) Applicant: Kabushiki Kaisha Toyota Jidoshokki, Kariya-shi, Aichi-ken (JP)
(72) Inventor: Kuramoto, Satoru, Kariya-shi, Aichi-ken (JP); Yamada, Takeshi, Kariya-shi, Aichi-ken (JP); Imai, Takayuki, Kariya-shi, Aichi-ken (JP)
(74) Representative: Leson, Thomas Johannes Alois, Dipl.-Ing.

(57) **Abstract**

A first housing member (11) and a second housing member (12) are coupled to each other. A recess (15) is formed in the second housing member (12) to face the first housing member (11). An O-ring (16) is accommodated in the recess. A block ring (17) is located in the recess (15) and extends along the O-ring (16). The block ring (17) is closer to an unsealed space than the O-ring and is made of a high gas permeation resistance material. Therefore, even if the pressurized gas in a sealed space permeates the O-ring, the block ring (17) prevents the gas from leaking to the unsealed space.

## Description

The present invention relates to a sealing structure for a joint of a housing, and more particularly, to a sealing structure for a joint of a housing that includes an O-ring.

In general, when members consisting a housing are secured to one another by fasteners such as bolts and the internal pressure of the housing is high, a sealing member such as an O-ring is installed at each joint to prevent gas from leaking from the housing.

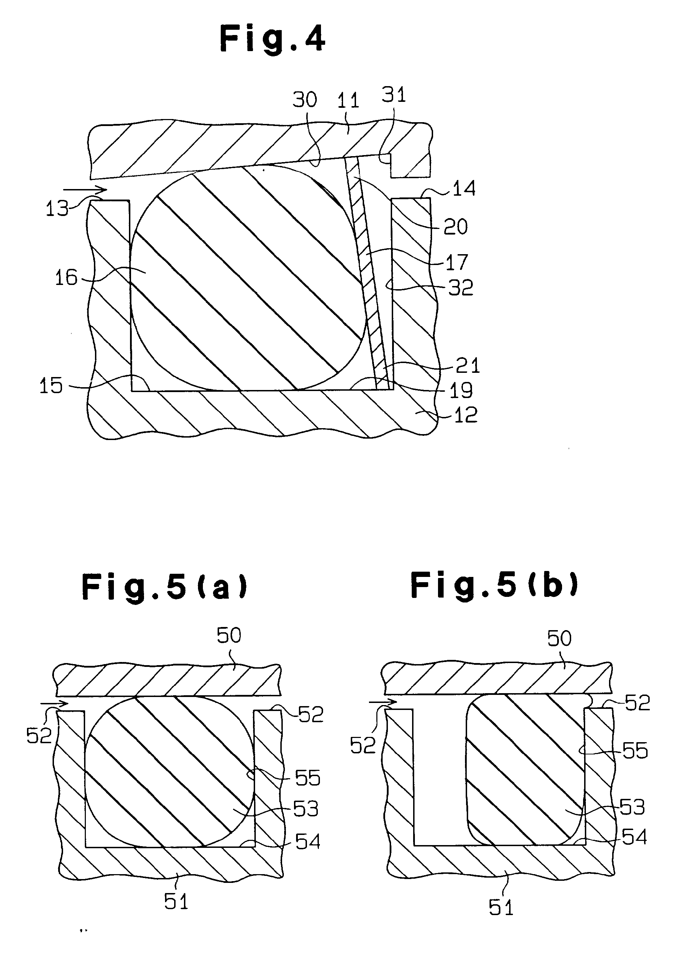

When assembling a housing, small clearances 52 are often created between a first housing member 50 and a second housing member 51 as shown in Fig. 5(a), for example, due to a failure in coupling. The clearances 52 may cause pressurized gas to leak from the housing. In the structure of Fig. 5(a), a rubber O-ring 53, which is located between the housing members 50 and 51, blocks the clearances 52 to prevent the pressurized gas from leaking.

The O-ring 53 is located in a recess 54 formed in the second housing member 51. In Fig. 5, the left end is defined as the inner side of the housing, and the right end is defined as the outer side of the housing. Fig. 5(a) shows a state in which there is no pressure difference between the inner side and the outer side. If pressurized gas enters the recess 54 through the route represented by arrow in Fig. 5(a), the O-ring 53 is deformed and pressed against a wall 55 of the recess 54 by the pressure of the gas as shown in Fig. 5(b). This increases the pressure between the O-ring 53 and the housing and, thus, improves the sealing.

However, if a gas that permeates rubber (for example, carbon dioxide) is used, the gas penetrates into and passes through the O-ring 53 (permeation). When permeation occurs, part of the gas that reaches the recess 54 through the inner clearance 52 leaks out through the outer clearance 52 despite the O-ring 53.

To prevent such a drawback, Japanese Unexamined Patent Publication No. 9-42156 discloses a structure that has a multiple sealing members. The structure has, for example, multiple O-rings. Specifically, a sealing structure, which includes double O-rings, is located at each joint between adjacent housing members. The objective of the structure is to improve the sealing of the housing by the double O-ring sealing structure.

However, if a gas that permeates rubber is used in the double O-ring structure of conventional rubber O-rings, the gas is likely to leak.

O-rings are preferably made of rubber that has balanced characteristics such as heat resistance, oil resistance, blister resistance and gas permeation resistance. However, it is difficult to select a material that is excellent in all those characteristics.

Also, a multiple O-ring structure requires that the thickness of the corresponding housing part be increased, which increases the size of the housing. Also, if the radial size of an O-ring is increased to guarantee a sufficient sealing, the thickness of the housing needs to be increased. If refrigerant is carbon dioxide, an O-ring that has an increased radial dimension cannot prevent the gas from leaking.

Accordingly, it is an objective of the present invention to provide a simple sealing structure for joints of a housing that effectively seals the housing with rubber seal members even if a gas that permeates rubber is used, facilitates the selection of rubber material and reduces the size of the housing.

To achieve the foregoing and other objectives and in accordance with the purpose of the present invention, a sealing structure for a joint of a housing is provided. The sealing structure includes a first housing member and a second housing member, which are secured to each other, a recess, which is formed in the first housing member and faces the second housing member, an O-ring, which is accommodated in the recess and contacts the first and second housing members, and an annular block plate, which is located in the recess and has a high gas permeation resistance.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a partial cross-sectional view illustrating a sealing structure for a joint of a housing according to one embodiment of the present invention;
Fig. 2 is a partial cross-sectional view of the sealing structure of Fig. 1;
Figs. 3(a) to 3(h) are partial cross-sectional views illustrating a portion of housing devices of other embodiments;
Fig. 4 is a partial cross-sectional view illustrating a sealing structure for a joint of a housing according to another embodiment; and
Figs. 5(a) and 5(b) are partial cross-sectional views illustrating a prior art sealing structure for a joint of a housing.

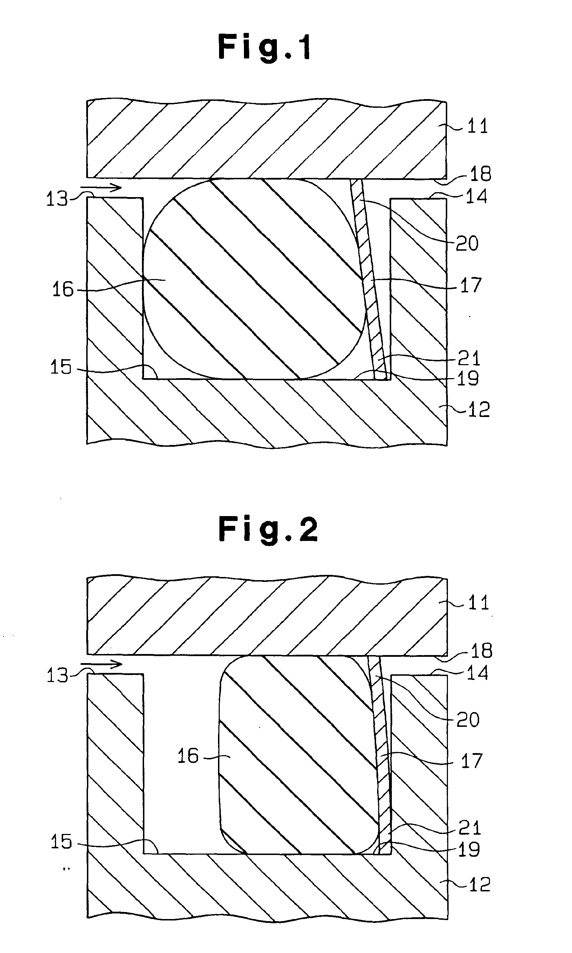

One embodiment according to the present invention will now be described with reference to Figs. 1 and 2.

Fig. 1 illustrates first and second housing members 11 and 12, which form at least part of a housing. The housing members 11, 12 are fastened to each other by bolts (not shown). Small clearances are often created between the housing members 11, 12 due to failure in coupling or to limits in design. Clearances 13, 14 in Fig. 1 represent such clearances. In this embodiment, the left end is adjacent to a space that should be sealed, and the right end is adjacent to a space that need not be sealed. The pressure of the sealed space is higher than the unsealed space. The sealed space is filled with carbon dioxide gas, which permeates rubber.

An annular O-ring recess 15 is formed in the second housing member 12. The recess 15 surrounds the sealed space. A rubber O-ring 16 is accommodated in and extends along the recess 15. Also, a metal block ring 17 is accommodated in the recess 15. The block ring extends along and surrounds the O-ring 16. The block ring 17 is located at the side closer to the unsealed space. The axial dimension of the block ring 17 (the vertical size as viewed in Fig. 1) is greater than the distance between the lower surface 18 of the first housing member 11 and the bottom 19 of the recess 15. When the block ring 17 is installed in the recess 15 and the housing members 11 and 12 are fastened to each other, the block ring 17 is inclined such that the upper end portion 20 is closer to the sealed space than the lower end portion 21. When the housing members 11, 12 are fastened to each other, the O-ring 16 is compressed and deformed by the housing members 11, 12 and the block ring 17 to form a seal between the housing members 11 and 12.

When the pressure in the sealed space increases and pressurized gas enters the recess 15 through the clearance 13 as shown by arrow, the O-ring 16 and the block ring 17 are urged toward the unsealed space. The O-ring 16 is contracted by the gas pressure than the state of Fig. 1 as shown in Fig. 2. In the state of Fig. 2, the block ring 17 is flexed by the gas pressure and the O-ring 16 and is urged toward the unsealed space. Also, the space between the upper end portion 20 and the first housing member 11 and the space between the lower end portion 21 and the bottom 19 are substantially eliminated.

A part of the first housing member 11 (the lower surface 18), the recess 15, the O-ring 16 and the block ring 17 form a sealing structure for a joint of the housing.

This embodiment has the following advantages.
(1) The block ring 17, which is located in the recess 15, is adjacent to the O-ring 16 at the side closer to the unsealed space. Since the block ring 17 is made of metal, the block ring 17 has a high gas permeation resistance. Therefore, if the pressurized gas is carbon dioxide, which permeates rubber, the block ring 17 significantly reduces the amount of leak of gas that has permeated the O-ring 16 to the unsealed space. That is, the airtightness of the housing is improved.
(2) The single recess 15 is formed in the second housing member 12, and the single O-ring 16 and the single block ring 17 are located in the recess 15 to improve the airtightness of the housing. Compared to cases in which there are multiple O-rings or a large O-ring, the above embodiment reduces the space for the sealing structure, which reduces the size of the housing. This is because the radial dimension (horizontal size as viewed in Fig. 1) of the block ring 17 can be easily reduced. Compared to a case in which multiple O-ring recesses are formed in a housing and an O-ring is located in each recess, the above embodiment reduces the machining processes for forming the O-ring recess, which simplifies the structure of the sealing structure.
(3) The block ring 17 is made of metal, which has an excellent gas permeation resistance. Thus, the block ring 17 improves the airtightness of the housing. This permits the O-ring 16 to be made of a material that has relatively low gas permeation resistance. Therefore, the material of the O-ring 16 can be relatively freely and easily selected. For example, nitrile rubber, which has high heat resistance, high blister resistance and high oil resistance but has relatively low gas permeation resistance against carbon dioxide, may be used for the O-ring 16. Compared to a case where a high gas permeability material is selected, selecting nitrile rubber for the O-ring 16 reduces the cost.

It should be apparent to those skilled in the art that the present invention may be embodied in many other specific forms without departing from the spirit or scope of the invention. Particularly, it should be understood that the invention may be embodied in the following forms.

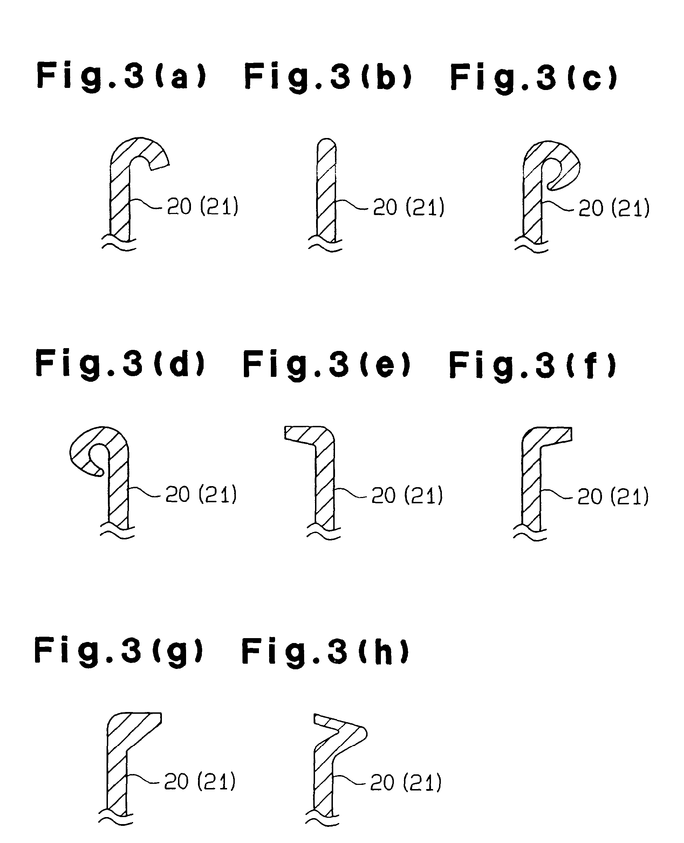

The cross-section of the block ring 17 need not be rectangular. The end portions 20, 21 may be deformed. For example, as shown in Fig. 3(a), the end portions 20, 21 may be U-shaped. As shown in Fig. 3(b), the end portions 20, 21 may be machined to have a semi-circular cross section. As shown in Fig. 3(c), the end of the end portion may be curled to form a closed space. In Fig. 3(d), the end portion is bent in the opposite direction from that of Fig. 3(c). As shown in Fig. 3(e), the end portion may be L-shaped. In Fig. 3(f), the end portion is L-shaped and is bent in the opposite direction from that of Fig. 3(e). As shown in Fig. 3(g), a projection that has a substantially triangular cross-section may be formed in the end portion. Fig. 3(h) shows a modification of the embodiment of Fig. 3(g). Specifically, a recess is formed in the opposite side from the triangular projection. For example, in the embodiments of Figs. 3(a), 3(c), 3(f), 3(g), 3(h), a part of the upper portion 20 is located in the clearance 14, which narrows the passage of gas leak. The embodiment of 3(b) permits the block ring 17 to be tightly pressed against the housing.

The embodiments of Figs. 3(d) and 3(e) reduce the space between the end portions 20, 21 and the O-ring 16, which narrows the leak passage. The block rings 17 of the embodiments of Figs. 3(d), 3(e), 3(h) receive a relatively great force of gas pressure, which can increase the force by which the block ring 17 is pressed against the housing.

A surface that contacts the block ring 17 at a relatively large area may be formed in the bottom of the first housing member 11. For example, as shown in Fig. 4, a surface 31 may be formed in the bottom of the first housing member 11 by machining the lower surface 18 of the first embodiment. When the block ring 17 is urged toward the unsealed space, the upper end portion 20 contacts the surface 31 at a relatively large area. Further, a surface 32 of the recess 15 may be formed such that the lower end portion 21 of the block ring 17 contacts the surface 32 at a relatively large area when the upper end portion 20 contacts the surface 31 at a relatively large area. When the block ring 17 is urged toward the unsealed space, the block ring 17 contacts the surfaces 31, 32 at relatively large areas, which reliably blocks the route of gas leak to the unsealed space.

The material of the block ring 17 is not limited to metal. That is, the block ring 17 may be made of any material that has a high gas permeation resistance. For example, the block ring 17 may be made of resin. In this case, it is easy to determine the shape of the block ring 17. Also, when using resin, nylon 66, acrylonitrilestyrene-butadiene copolymer that includes more than 50% of acrylonitrile or nylon 6/nylon 66 copolymer may be used. These materials have a high gas permeation resistance against carbon dioxide and improve the sealing against carbon dioxide, which permeates rubber. When made of resin, the block ring 17 may be plated. In this case, even if the resin has a low gas permeation resistance, the block ring 17 has a high gas permeation resistance.

As long as the block ring 17 has a high gas permeation resistance, the block ring 17 need not have a high gas permeation resistance against carbon dioxide.

The outer surface of the block ring 17 (the surface closer to the unsealed space) may be coated with rubber such as nitrile-butadien rubber (NBR). This structure permits the block ring 17 to tightly contact the recess 15, which improves the airtightness of the housing. The elastic coating may be located at least on the outer side of the block ring 17. Alternatively, both sides of the block ring 17 may be coated with rubber.

The housing in the embodiment is not limited to the housing of a compressor.

Therefore, the present examples and embodiments are to be considered as illustrative and not restrictive and the invention is not to be limited to the details given herein, but may be modified within the scope and equivalence of the appended claims.
A first housing member (11) and a second housing member (12) are coupled to each other. A recess (15) is formed in the second housing member (12) to face the first housing member (11). An O-ring (16) is accommodated in the recess. A block ring (17) is located in the recess (15) and extends along the O-ring (16). The block ring (17) is closer to an unsealed space than the O-ring and is made of a high gas permeation resistance material. Therefore, even if the pressurized gas in a sealed space permeates the O-ring, the block ring (17) prevents the gas from leaking to the unsealed space.

## Claims

1. A sealing structure for a joint of a housing, **characterized by**:
a first housing member (11) and a second housing member (12), wherein the housing members are secured to each other;
a recess (15), which is formed in the first housing member (11) and faces the second housing member (12);
an O-ring (16), which is accommodated in the recess (15) and contacts the first and second housing members (11, 12); and
an annular block plate (17), which is located in the recess (15) and has a high gas permeation resistance.

2. The sealing structure according to claim 1, **characterized by** that the block plate (17) is made of metal.

3. The sealing structure according to claim 1, **characterized by** that the block plate (17) is made of a material that has a high gas permeation resistance gains carbon dioxide.

4. The sealing structure according to claim 1, **characterized by** that an elastic coating is formed on the block plate (17).

5. The sealing structure according to claim 1, **characterized by** that the block plate (17) is made of a material that is selected from the group consisting of nylon 66, acrylonitrilestyrene-butadiene copolymer that includes more than 50% of acrylonitrile and nylon 6/nylon 66 copolymer.

6. The sealing structure according to claim 1, **characterized by** that the housing members (11, 12) form the housing of a compressor.

7. The sealing structure according to claim 1, **characterized by** that a flat surface is formed on the second housing member (12) to face the recess (15), and wherein the flat surface contacts the block plate (17).
